# EUROPÄISCHE PATENTSCHRIFT

(11) **EP 3 245 570 B1**
(45) Veröffentlichungstag und Bekanntmachung des Hinweises auf die Patenterteilung: **27.11.2019**
(21) Anmeldenummer: 16714270.2
(22) Anmeldetag: 17.03.2016
(51) Int. Cl.: G06F 1/14

(54) **VORRICHTUNG, VERFAHREN UND SYSTEM ZUR ERFASSUNG UND AUFLÖSUNG VON ZEITINFORMATIONEN UNTERSCHIEDLICHER ADMINISTRATIVER DOMÄNEN**
DEVICE, METHOD AND SYSTEM FOR DETECTING AND RESOLVING TIME INFORMATION OF DIFFERENT ADMINISTRATIVE DOMAINS
DISPOSITIF, PROCÉDÉ ET SYSTÈME PERMETTANT DE DÉTERMINER ET DE RÉSOUDRE DES INFORMATIONS TEMPORELLES DE DIFFÉRENTS DOMAINES ADMINISTRATIFS

(30) Priorität: 25.03.2015 DE 102015205406
(43) Veröffentlichungstag der Anmeldung: 22.11.2017
(73) Patentinhaber: Siemens Aktiengesellschaft, 80333 München (DE)
(72) Erfinder: FALK, Rainer, 85586 Poing (DE); FISCHER, Kai, 85598 Baldham (DE); FRIES, Steffen, 85598 Baldham (DE); KLASEN, Wolfgang, 85521 Ottobrunn (DE)
(86) Internationale Anmeldenummer: PCT/EP2016/055813
(87) Internationale Veröffentlichungsnummer: WO 2016/150814

(56) Entgegenhaltungen:
- US-A1- 2013 326 088
- PAOLO FERRARI ET AL: "Architecture of an embedded time gateway between PTP and SNTP", INDUSTRIAL EMBEDDED SYSTEMS (SIES), 2011 6TH IEEE INTERNATIONAL SYMPOSIUM ON, IEEE, 15. Juni 2011 (2011-06-15), Seiten 71-74, XP031893734, DOI: 10.1109/SIES.2011.5953683 ISBN: 978-1-61284-818-1
- FERRARI P ET AL: "On the Seamless Interconnection of IEEE1588-Based Devices Using a PROFINET IO Infrastructure", IEEE TRANSACTIONS ON INDUSTRIAL INFORMATICS, IEEE SERVICE CENTER, NEW YORK, NY, US, Bd. 6, Nr. 3, 1. August 2010 (2010-08-01), Seiten 381-392, XP011334330, ISSN: 1551-3203, DOI: 10.1109/TII.2010.2051954
- ESTRELA PEDRO V ET AL: "Using a multi-source NTP watchdog to increase the robustness of PTPv2 in financial industry networks", 2014 IEEE INTERNATIONAL SYMPOSIUM ON PRECISION CLOCK SYNCHRONIZATION FOR MEASUREMENT, CONTROL, AND COMMUNICATION (ISPCS), IEEE, 22. September 2014 (2014-09-22), Seiten 87-92, XP032677602, DOI: 10.1109/ISPCS.2014.6948697 [gefunden am 2014-11-05]
- GOETZ FRANZ-JOSEF ET AL: "Dual Time Scale in Factory & Energy Automation", IEEE DRAFT; AS-GOETZ-IND-REQ-0712-V2, IEEE-SA, PISCATAWAY, NJ USA, Bd. 802.1, Nr. v2, 16. Juli 2012 (2012-07-16), Seiten 1-26, XP068008500, [gefunden am 2012-07-16]

## Beschreibung

Die vorliegende Erfindung betrifft eine Vorrichtung und ein Verfahren zur Erfassung von Zeitinformationen unterschiedlicher administrativer Domänen in IT-basierten Systemen, sowie das diesbezügliche System.

Industrie 4.0 bezeichnet die Durchdringung der Fertigungstechnik mit Informations- und Kommunikationstechnologien. Dabei wird das Ziel verfolgt, die Wertschöpfungs- und Lieferketten eines Unternehmens zu optimieren. Bislang weitgehend unabhängig voneinander betriebene Fertigungsstufen sind hinsichtlich Planung, Steuerung und Überwachung von Fertigungsabläufen eng zu koordinieren.

Dies erfordert insbesondere zwischen den einzelnen Fertigungsstufen einen automatisierten Informationsaustausch. Die hinter der Fertigungstechnik stehenden, in administrativen Domänen organisierten IT-basierten Systeme erfahren dadurch eine ansatzweise Integration über Domänengrenzen hinweg.

Zeit ist dabei häufig die einzige oder durchgängigste Information, anhand welcher Fertigungsereignisse korrelierbar sind. Angesichts verschiedener Zeitquellen, unterschiedlich präziser Zeitquellen, administrativer Gründe oder schlicht wegen Fehlfunktionen sind Zeitunterschiede zwischen den in der Wertschöpfungskette mitwirkenden administrativen Domänen allerdings nicht ungewöhnlich.

Die Druckschrift US 2013/0326088 A1 offenbart ein Ansatz zum Zeiteinstellen. Das Subsystem weist eine Synchronisationseinheit weist. Die Synchronisationseinheit synchronisiert eine Zeit einer Systemuhr mit einer Zeit, welche von einer Referenzuhr angegeben wird. Ferner weist das Subsystem eine Unterschiedberechnungseinheit auf. Die Unterschiedberechnungseinheit erhält von einer Mehrzahl von Domänen jeweils eine Zeit, welche von einer Systemuhr angegeben wird. Die jeweilige Zeit der Systemuhr wird durch eine entsprechende Synchronisationseinheit der Mehrzahl der Domänen ebenfalls mit der Referenzzeit synchronisiert. Ferner berechnet die Unterschiedberechnungseinheit den Zeitunterschied zwischen der jeweiligen angegebenen Zeit der Systemuhren der Domänen und der angegebenen Zeit der Systemuhr des Subsystems 100. Die Zeitunterschiede der Systemuhren werden für jede der Domänen in einer Unterschiedspeichereinheit gespeichert. Die Domänen können mit einem NTP Server synchronisiert werden, welcher zur Synchronisation fähig ist.

Ferner betrifft die Druckschrift "Architecture of an embedded time gateway between PTP and SNTP" von Paolo Ferrari et al. die Zeitsynchronisation in gemischten Netzwerk Infrastrukturen.

Vor diesem Hintergrund besteht eine Aufgabe der vorliegenden Erfindung darin, die Erfassung und Auflösung der Zeitunterschiede zwischen administrativen Domänen zu verbessern.

Demgemäß wird eine Vorrichtung zur Erfassung von Zeitinformationen unterschiedlicher administrativer Domänen, wie in Anspruch 1 definiert, vorgeschlagen. Die Vorrichtung umfasst eine Mehrzahl von Erfassungseinheiten, wobei die jeweilige Erfassungseinheit einer der administrativen Domänen zugeordnet ist und dazu eingerichtet ist, Zeitinformationen von einem Zeitgeber der zugeordneten administrativen Domäne zur Synchronisation mit der zugeordneten administrativen Domäne zu empfangen. Die Vorrichtung umfasst ferner eine Speichervorrichtung mit einer Mehrzahl von Speicherbereichen und eine Mehrzahl von Steuereinheiten, wobei die jeweilige Steuereinheit genau einer der Erfassungseinheiten zugeordnet ist, wobei die Steuereinheiten dazu eingerichtet sind, synchron zueinander jeweils eine jüngste der empfangenen Zeitinformationen der jeweiligen zugeordneten Erfassungseinheit zu erfassen und die synchron erfassten Zeitinformationen der Mehrzahl der Erfassungseinheiten gemeinsam als Synchronisationsdaten in einem der Speicherbereiche zu speichern.

Dies erlaubt, Zeitinformationen unterschiedlicher administrativer Domänen zeitgleich zu erfassen und somit auch einen eventuellen Zeitversatz aktuell oder auch zu einem späteren Zeitpunkt aufzulösen. Insbesondere ist dies auch dann möglich, wenn eine Zeitsynchronizität zwischen den administrativen Domänen nicht erwünscht bzw. nicht umsetzbar ist, weil dies einen Eingriff in administrative Verantwortung darstellt. Beispielsweise ist auf diese Weise auch ein zeitvarianter Zeitversatz auflösbar. Das Auflösen zeitlicher Unterschiede zwischen administrativen Domänen funktioniert insbesondere auch im Fall heterogener Architekturen. Es sollen also nicht wie bei herkömmlichen Zeitsynchronisationsprotokollen die lokalen Zeitquellen der unterschiedlichen Domänen synchronisiert werden. Die vorliegende Vorrichtung stellt eine Lösung für die Situation bereit, dass die Zeitquellen unterschiedlicher Domänen nicht synchronisiert sind bzw. nicht synchronisierbar sind.

Damit wird insbesondere eine domänenübergreifende Planung und Korrektur von Abläufen und Prozessen ermöglicht. Ferner wird die domänenübergreifende Nachvollziehbarkeit von Abläufen und Prozessen unterstützt.

Ein Zeitversatz zwischen administrativen Domänen kommt insbesondere systematisch, beispielsweise durch administrative Eingriffe, verschiedene Zeitquellen, verschieden präzise Zeitquellen oder durch Fehlfunktionen zustande.

Vorzugsweise umfasst jede Erfassungseinheit selbst einen Zeitgeber, welcher zum Erfassen der Zeitinformationen der jeweils zugeordneten administrativen Domäne mit dem Zeitgeber derselben zu synchronisieren ist.

Synchron bedeutet vorliegend zeitlich abgestimmt.

Auflösen bezeichnet ein Übersetzen einer von zwei zeitgleich erfassten Zeitinformationen in die jeweils andere.

Zeitgeber sind vorliegend Funktionseinheiten zur Erzeugung von Zeitinformationen. Als Zeitgeber kommen insbesondere Zeitserver, rundsenderbasierte Zeitquellen (beispielsweise DCF77), satellitengestützte Zeitquellen (beispielsweise Global Positioning System (GPS), GLONASS, GALILEO, BEIDOU) oder funknetzbasierte Zeitquellen (beispielsweise Mobilfunksysteme oder Rundfunksysteme) in Betracht.

Die Synchronisation der Erfassungseinheiten mit ihren jeweils zugeordneten administrativen Domänen erfolgt insbesondere über Zeitsynchronisationsprotokolle wie etwa das Network Time Protocol (NTP) oder das Precision Time Protocol (PTP, IEEE 1588), über Web-Protokolle wie das Hypertext Transfer Protocol (HTTP) oder das Constrained Application Protocol (CoAP), das Message Queuing Telemetry Transport (MQTT), Extensible Messaging and Presence Protocol (XMPP), IEEE C37.238 (Anwendung der IEEE 1588 in der Power System Domäne) und dergleichen.

Zeitinformationen umfassen vorliegend zumindest einen Zeitstempel eines Zeitgebers.

Synchronisationsdaten weisen insbesondere eine Mehrzahl von Zeitinformationen auf.

Administrative Domänen stellen insbesondere Abschnitte ITbasierter Systeme dar, welche jeweils einer einheitlichen Verwaltung unterstehen. Diese umfasst beispielsweise den Unterhalt eines Zeitservers, welcher die für die administrative Domäne maßgebliche Zeit vorgibt.

Die Speichervorrichtung ist bevorzugt ein flüchtiger oder nichtflüchtiger Festkörperspeicher, ein Festplattenspeicher oder eine Kombination daraus.

Speicherbereiche sind insbesondere adressierbare logische Abschnitte der Speichervorrichtung.

Die Steuereinheit ist vorzugsweise eine Einheit, welche bestimmte Vorgänge in Abhängigkeit eines Programms und/oder einer festen Verdrahtung steuert. Die Steuereinheit kann demzufolge in Software und/oder Hardware realisiert sein.

Gemäß der Erfindung sind die Steuereinheiten dazu eingerichtet, zu einem bestimmten Zeitpunkt einer von einer Referenzzeitquelle vorgegebenen Referenzzeit jeweils die jüngste der empfangenen Zeitinformationen der jeweiligen zugeordneten Erfassungseinheit zu erfassen und die zu dem bestimmten Zeitpunkt erfassten Zeitinformationen der Mehrzahl der Erfassungseinheiten gemeinsam mit dem bestimmten Zeitpunkt als die Synchronisationsdaten in dem Speicherbereich zu speichern.

Dies erlaubt es, Zeitinformationen mehrerer administrativer Domänen zu erfassen und damit auch einen Zeitversatz zwischen diesen aktuell oder auch zu einem späteren Zeitpunkt aufzulösen.

Die Referenzzeitquelle ist insbesondere eine selbst von einer hochgenauen Zeitquelle, wie beispielsweise einer Atomuhr, abgeleitete Quelle eines einheitlichen Zeitmaßstabs.

Die Referenzzeit ist vorliegend ein aus der Referenzzeitquelle gewonnener einheitlicher Zeitmaßstab.

Die Synchronisationsdaten umfassen insbesondere die Zeitinformationen der jeweils erfassten administrativen Domänen, Versatzinformationen (Zeitversatz) zwischen Zeitinformation, oder auch eine statistische Information der Schwankung der Versatzinformationen, beispielsweise hinsichtlich Maximalwert, Mittelwert, Varianz, maximaler Abweichung oder dergleichen.

Vorteilhaft ermöglicht Letzteres zu ermitteln, ob überhaupt eine verlässliche Zeitinformation erfassbar ist, was insbesondere eine hinreichend geringe Schwankung der Versatzinformation erfordert.

Vorzugsweise sind die Synchronisationsdaten mit der jeweiligen Referenzzeit kryptographisch signiert oder beglaubigt, so dass später die Authentizität der erfassten Zeitinformationen nachprüfbar ist.

Gemäß einer weiteren Ausführungsform ist die Referenzzeitquelle als eine lokale Referenzzeitquelle der Vorrichtung ausgebildet.

Die lokale Referenzzeitquelle ist beispielsweise eine Chip-Scale Atomic Clock (CSAC).

Gemäß einer weiteren Ausführungsform ist die Referenzzeitquelle als eine externe Referenzzeitquelle außerhalb der Vorrichtung ausgebildet.

Gemäß einer weiteren Ausführungsform sind die Steuereinheiten dazu eingerichtet, sich mit der Referenzzeitquelle zu synchronisieren.

Vorteilhaft ergibt sich eine höhere Synchronizität, das heißt eine genauere zeitliche Abstimmung, der Steuereinheiten untereinander beim Erfassen der jeweils jüngsten der empfangenen Zeitinformationen.

Gemäß einer weiteren Ausführungsform sind die Steuereinheiten dazu eingerichtet, einen jeweiligen Zeitversatz zwischen einem Zeitstempel des Zeitgebers der zugeordneten administrativen Domäne und der Referenzzeit als Zeitinformation zu erfassen und zumindest als Teil der Synchronisationsdaten in dem Speicherbereich zu speichern.

Ein Vorteil ist dabei der geringere Speicherbedarf eines Zeitversatzes gegenüber einer Absolutzeit, was sich insbesondere bei hochfrequenter Erfassung von Synchronisationsdaten auswirkt.

Gemäß einer weiteren Ausführungsform umfasst die Vorrichtung eine Bereitstellungseinheit, welche dazu eingerichtet ist, die Synchronisationsdaten zumindest einer externen Einrichtung bereitzustellen.

Ein Bereitstellen durch die Bereitstellungseinheit erfolgt vorzugsweise auf Anfrage, insbesondere über eine Web-Service-Schnittstelle, oder alternativ per Abstrahlung (Broadcast).

Eine solche Anfrage umfasst bevorzugt eine erste Information zur Angabe des Zeitraums oder des Zeitpunkts, auf welchen sich das Bereitstellen bezieht. Ferner kann die Anfrage eine zweite Information umfassen, welche ein Eingrenzen der bereitzustellenden Zeitinformationen auf eine Teilmenge der administrativen Domänen ermöglicht.

Ein Abstrahlen findet insbesondere über ein Mobilfunksystem, beispielsweise Universal Mobile Telecommunications System (UMTS), Long Term Evolution (LTE), Code Division Multiple Access 2000 (CDMA2000), Worldwide Interoperability for Microwave Access (WiMAX) oder dergleichen, über ein Rundfunksystem wie zum Beispiel Digital Audio Broadcast (DAB) oder Digital Video Broadcast - Terrestrial (DVB-T) oder über ein Satellitensystem (etwa GPS, GALILEO, GLONASS, BEIDOU) statt.

Gemäß einer weiteren Ausführungsform umfasst die Vorrichtung eine Bereitstellungseinheit, welche dazu eingerichtet ist, die Synchronisationsdaten oder eine von den Synchronisationsdaten abgeleitete Synchronisationsinformation zumindest einer externen Einrichtung bereitzustellen.

Die abgeleitete Synchronisationsinformation ist beispielsweise ein mit einer kryptographischen Prüfsumme wie etwa einem Message Authentication Code oder einer digitalen Signatur gegen Manipulation geschütztes Synchronisationsdatum.

Gemäß einer weiteren Ausführungsform umfasst die Vorrichtung eine Bereitstellungseinheit, welche dazu eingerichtet ist, eine Anfrage-Nachricht für eine Versatz-Information zwischen den Zeitinformationen von zwei der administrativen Domänen, welche eine erste Information zur Angabe einer Transformation zwischen einer ersten administrativen Domäne und einer zweiten administrativen Domäne und eine zweite Information zur Angabe des Zeitraums für die Transformation enthält, zu empfangen, die Versatz-Information als Differenz zwischen einer ersten Zeitinformation bezogen auf die erste administrative Domäne und einer zweiten Zeitinformation bezogen auf die zweite administrative Domäne in Abhängigkeit der empfangenen Anfrage-Nachricht und der gespeicherten Synchronisationsdaten zu berechnen und eine Antwort-Nachricht mit der berechneten Versatz-Information bereitzustellen.

Transformation bezeichnet ein Übersetzen einer von zwei zeitgleich erfassten Zeitinformationen in die jeweils andere, wobei diese Zeitinformationen insbesondere in einem Informationskontext, beispielsweise einer Datenbank oder Log-Datei, mit definiertem Datenformat befindlich sind.

Gemäß einer weiteren Ausführungsform ist die Bereitstellungseinheit dazu eingerichtet, die gespeicherten Synchronisationsdaten ausschließlich über eine gesicherte Verbindung der zumindest einen externen Einrichtung bereitzustellen. Die gesicherte Verbindung ist insbesondere eine verschlüsselte und/oder integritätsgeschützte Verbindung.

Vorteilhaft werden hierdurch Manipulationen bei der Datenübertragung verhindert.

Eine Verschlüsselung erfolgt zum Beispiel mittels Secure Sockets Layer (SSL), Transport Layer Security (TLS), Internet Protocol Security (IPSec) oder proprietärer Funktionen mit entsprechendem Sicherheitsniveau.

Gemäß einer weiteren Ausführungsform umfasst die zumindest eine externe Einrichtung zumindest eine der administrativen Domänen.

Administrativen Domänen wird hierdurch ermöglicht, beispielsweise von sich aus, das Auflösen des Zeitversatzes zu anderen administrativen Domänen zu veranlassen.

Gemäß einer weiteren Ausführungsform umfasst die Zeitinformation einen Zeitstempel des Zeitgebers der zugeordneten administrativen Domäne und eine Identifikationsinformation zur Identifikation der dem Zeitgeber zugeordneten administrativen Domäne.

Ein Vorteil ist insbesondere die spätere Nachvollziehbarkeit der dem Zeitstempel zugeordneten administrativen Domäne.

Gemäß einer weiteren Ausführungsform weist die Identifikationsinformation eine Netzwerkadresse der zugeordneten administrativen Domäne, eine URL der zugeordneten administrativen Domäne und/oder einen Domänennamen der zugeordneten administrativen Domäne auf.

Hierdurch sind insbesondere administrative Domänen in heterogenen Architekturen bezüglich des Erfassens von Zeitinformation integrierbar.

Gemäß der Erfindung umfasst die Vorrichtung weiterhin eine Übersetzungseinheit, welche dazu eingerichtet ist, eine erste Zeitinformation bezogen auf eine erste administrative Domäne der Mehrzahl der administrativen Domänen mittels der gespeicherten Synchronisationsdaten in eine zweite Zeitinformation bezogen auf eine zweite administrative Domäne der Mehrzahl der administrativen Domänen zu übersetzen.

Somit ist ein Zeitversatz insbesondere zwischen Paaren von administrativen Domänen oder zwischen verschiedenen administrativen Domänen und einer Referenzzeitquelle universell auflösbar.

Gemäß einer weiteren Ausführungsform umfasst die Vorrichtung eine Transformationseinheit. Diese ist dazu eingerichtet, eine auf eine erste administrative Domäne der administrativen Domänen zeitbezogene Information in eine auf eine zweite administrative Domäne der administrativen Domänen zeitbezogene Information zu transformieren. Dabei ist die Transformationseinheit dazu eingerichtet, eine erste Anfrage-Nachricht für die auf die zweite administrative Domäne zeitbezogene Information zu empfangen. Diese enthält eine erste Zeitinformation bezogen auf die erste administrative Domäne, eine zweite Zeitinformation bezogen auf die zweite administrative Domäne und die auf die erste administrative Domäne zeitbezogene Information. Ferner ist die Transformationseinheit dazu eingerichtet, eine zweite Anfrage-Nachricht für ein auf die erste administrative Domäne und die zweite administrative Domäne bezogenes Synchronisationsdatum an die Bereitstellungseinheit zu senden. Diese Nachricht enthält die erste Zeitinformation, die zweite Zeitinformation und eine Information zur Angabe eines Zeitraums für die Transformation. Zudem ist die Transformationseinheit dazu eingerichtet, eine erste Antwort-Nachricht mit dem Synchronisationsdatum von der Bereitstellungseinheit zu empfangen, welches eine dritte Zeitinformation bezogen auf die erste administrative Domäne und eine vierte Zeitinformation bezogen auf die zweite administrative Domäne umfasst. Die Transformationseinheit ist außerdem dazu eingerichtet, eine zweite Antwort-Nachricht mit der auf die zweite administrative Domäne zeitbezogenen Information in Abhängigkeit von der auf die erste administrative Domäne zeitbezogenen Information und des empfangenen Synchronisationsdatums bereitzustellen.

Vorteilhaft wird eine automatisierte Umsetzung von zeitbezogenen Informationen mit bekanntem Datenformat, beispielsweise Log-Dateien oder Datenbanken, hinsichtlich ihres Zeitbezugs zwischen administrativen Domänen ermöglicht.

Bevorzugt ist die Übertragung automatisiert umzusetzender, zeitbezogener Informationen kryptographisch geschützt, insbesondere durch verschlüsselte und/oder integritätsgeschützte Verbindungen zu den beteiligten administrativen Domänen.

Die durch die Transformationseinheit automatisiert umzusetzenden, zeitbezogenen Informationen sind vorzugsweise kryptographisch signiert, um die Authentizität der Informationen aus der ersten administrativen Domäne zu verifizieren.

Ferner sind die durch die Transformationseinheit automatisiert umgesetzten, zeitbezogenen Informationen bevorzugt kryptographisch signiert, um die Authentizität der Informationen auch in der zweiten administrativen Domäne verifizieren zu können.

Die jeweilige Einheit, zum Beispiel Erfassungseinheit oder Steuerungseinheit, kann hardwaretechnisch und/oder auch softwaretechnisch implementiert sein. Bei einer hardwaretechnischen Implementierung kann die jeweilige Einheit als Vorrichtung oder als Teil einer Vorrichtung, zum Beispiel als Computer oder als Mikroprozessor oder als Steuerrechner einer Fertigungssteuerung, eines Prozesssteuerung, eines führerlosen Transportsystems, eines Fahrzeuges ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

Ferner wird ein System vorgeschlagen, welches eine Mehrzahl unterschiedlicher administrativer Domänen, eine wie oben beschriebene Vorrichtung zur Erfassung von Zeitinformationen der administrativen Domänen und ein Netzwerk zum Koppeln der Vorrichtung mit den administrativen Domänen aufweist.

Gemäß einer Ausführungsform umfasst das System eine zwischen einer ersten und einer zweiten der administrativen Domänen gekoppelte Transformationseinheit. Diese ist dazu eingerichtet, eine auf die erste administrative Domäne zeitbezogene Information in eine auf die zweite administrative Domäne zeitbezogene Information zu transformieren. Dabei ist die Transformationseinheit dazu eingerichtet, die auf die erste administrative Domäne zeitbezogene Information zu empfangen. Sie ist ferner dazu eingerichtet, eine Anfrage-Nachricht für ein auf die erste administrative Domäne und die zweite administrative Domäne bezogenes Synchronisationsdatum an die Bereitstellungseinheit zu senden. Diese Nachricht enthält eine erste Zeitinformation bezogen auf die erste administrative Domäne, eine zweite Zeitinformation bezogen auf die zweite administrative Domäne und eine dritte Zeitinformation zur Angabe eines Zeitraums für die Transformation. Darüber hinaus ist die Transformationseinheit dazu eingerichtet, eine Antwort-Nachricht mit dem Synchronisationsdatum von der Bereitstellungseinheit zu empfangen, welches eine dritte Zeitinformation bezogen auf die erste administrative Domäne und eine vierte Zeitinformation bezogen auf die zweite administrative Domäne umfasst. Des Weiteren ist die Transformationseinheit dazu eingerichtet, eine auf die zweite administrative Domäne zeitbezogene Information in Abhängigkeit von der auf die erste administrative Domäne zeitbezogenen Information und des empfangenen Synchronisationsdatums bereitzustellen.

Dies erlaubt die automatisierte Umsetzung von zeitbezogenen Informationen mit bekanntem Datenformat, beispielsweise Log-Dateien oder Datenbanken, hinsichtlich ihres Zeitbezugs zwischen zwei aneinander gekoppelten administrativen Domänen.

Weiterhin ist vorteilhaft, dass das Einbeziehen von Synchronisationsdaten in die Transformation eine zwischen der ersten und zweiten administrativen Domäne auftretende Drift eines Zeitversatzes kompensierbar macht.

Gemäß einer Ausführungsform sind auch zeitbezogene Informationen mehrerer administrativer Domänen in zeitbezogene Informationen einer anderen administrativen Domäne automatisiert umsetzbar.

Vorzugsweise ist die zeitbezogene Information eine Absolutzeit einer administrativen Domäne, so dass die Transformationseinheit als sogenannte Boundary Clock fungiert, welche über eine Taktverteilung hinaus dazu eingerichtet ist, den Zeitversatz zwischen der ersten und zweiten administrativen Domäne aufzulösen.

Gemäß einer weiteren Ausführungsform umfasst das System eine zwischen der ersten und der zweiten der administrativen Domänen gekoppelte Bereitstellungseinheit, welche dazu eingerichtet ist, eine Anfrage-Nachricht für eine Versatz-Information zwischen einer ersten Zeitinformation bezogen auf die erste administrative Domäne und einer zweiten Zeitinformation bezogen auf die zweite administrative Domäne, wobei die Anfrage-Nachricht eine Information zur Angabe des Zeitraums für die Bereitstellung enthält, zu empfangen, die Versatz-Information als Differenz zwischen der ersten Zeitinformation und der zweiten Zeitinformation in Abhängigkeit der empfangenen Anfragenachricht und der gespeicherten Synchronisationsdaten zu berechnen und eine Antwort-Nachricht mit der berechneten Versatz-Information bereitzustellen.

Hiermit ist eine Versatz-Information zwischen den Zeitinformationen der angekoppelten administrativen Domänen auch dezentral bereitstellbar, was insbesondere in Anwendungsszenarien mit hohen Bereitstellungsraten Lastspitzen abwenden kann.

Außerdem wird ein Verfahren zur Erfassung von Zeitinformationen unterschiedlicher administrativer Domänen, wie in Anspruch 14 definiert, vorgeschlagen. Das Verfahren weist unter anderem die folgenden Schritte auf:
Empfangen der Zeitinformationen von einem jeweiligen Zeitgeber der administrativen Domänen, Synchrones Erfassen jeweils einer jüngsten der von den Zeitgebern empfangenen Zeitinformationen, und Speichern der synchron erfassten Zeitinformationen gemeinsam als Synchronisationsdaten in einem Speicherbereich einer Speichervorrichtung.

Weiterhin wird ein Computerprogrammprodukt vorgeschlagen, welches auf einer programmgesteuerten Einrichtung die Durchführung des wie oben erläuterten Verfahrens veranlasst.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Die für die vorgeschlagene Vorrichtung beschriebenen Ausführungsformen und Merkmale gelten für das vorgeschlagene Verfahren entsprechend.

Weitere mögliche Implementierungen der Erfindung umfassen auch nicht explizit genannte Kombinationen von zuvor oder im Folgenden bezüglich der Ausführungsbeispiele beschriebenen Merkmalen oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
Fig. 1 zeigt ein schematisches Blockschaltbild eines ersten Ausführungsbeispiels eines Systems mit einer Vorrichtung zur Erfassung von Zeitinformationen unterschiedlicher administrativer Domänen;
Fig. 2 zeigt ein schematisches Blockschaltbild eines ersten Ausführungsbeispiels einer Speichervorrichtung;
Fig. 3 zeigt ein schematisches Blockschaltbild eines zweiten Ausführungsbeispiels der Speichervorrichtung;
Fig. 4 zeigt in einer schematischen Darstellung einen Zeitstrahl mit mehreren zueinander versetzten Zeitinformationen;
Fig. 5 zeigt ein schematisches Blockschaltbild eines zweiten Ausführungsbeispiels des Systems mit einer Bereitstellungseinheit;
Fig. 6 zeigt ein schematisches Blockschaltbild eines dritten Ausführungsbeispiels des Systems mit der Bereitstellungseinheit;
Fig. 7 zeigt ein schematisches Blockschaltbild eines vierten Ausführungsbeispiels des Systems mit einer von der Vorrichtung abgesetzten Transformationseinheit;
Fig. 8 zeigt ein schematisches Blockschaltbild eines fünften Ausführungsbeispiels des Systems mit einer zwischen administrativen Domänen zu koppelnden Transformationseinheit; und
Fig. 9 zeigt ein schematisches Ablaufdiagramm eines Ausführungsbeispiels eines Verfahrens zur Erfassung von Zeitinformationen unterschiedlicher administrativer Domänen.

In den Figuren sind gleiche oder funktionsgleiche Elemente mit denselben Bezugszeichen versehen worden, sofern nichts anderes angegeben ist.

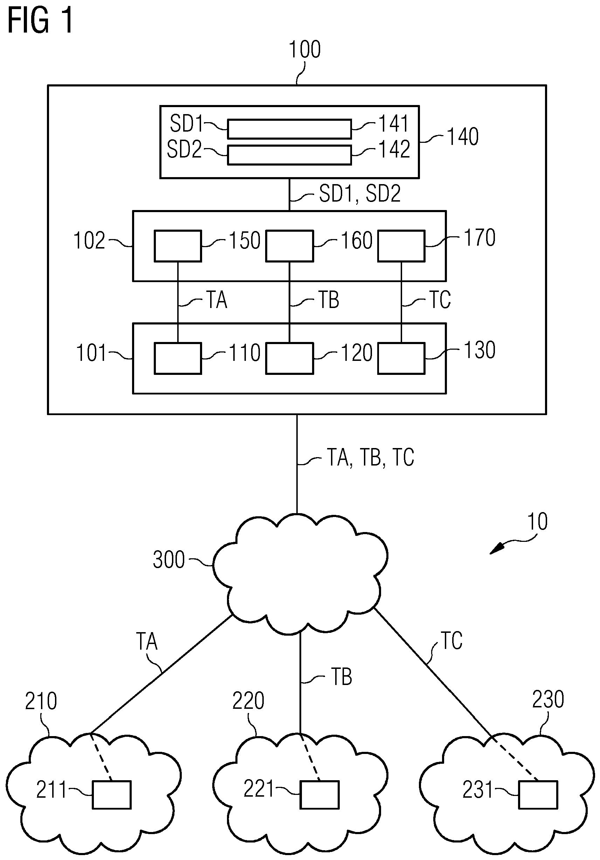

Fig. 1 zeigt ein schematisches Blockschaltbild eines ersten Ausführungsbeispiels eines Systems 10 mit einer Vorrichtung 100 zur Erfassung von Zeitinformationen TA, TB, TC unterschiedlicher administrativer Domänen 210, 220, 230.

Ferner weist das System 10 ein Netzwerk 300 zum Koppeln der Vorrichtung 100 mit den administrativen Domänen 210, 220, 230 auf.

Die Vorrichtung 100 umfasst eine Mehrzahl von Erfassungseinheiten 110, 120, 130. Diese sind jeweils einer der administrativen Domänen 210, 220, 230 zugeordnet und dazu eingerichtet, Zeitinformationen TA, TB, TC von einem Zeitgeber 211, 221, 231 der zugeordneten administrativen Domäne 210, 220, 230 zur Synchronisation mit derselben zu empfangen. Die Vorrichtung 100 umfasst ferner eine Speichervorrichtung 140 mit einer Mehrzahl von Speicherbereichen 141, 142, sowie eine Mehrzahl von Steuereinheiten 150, 160, 170, wobei die jeweilige Steuereinheit 150, 160, 170 genau einer der Erfassungseinheiten 110, 120, 130 zugeordnet ist. Die Steuereinheiten 150, 160, 170 sind dazu eingerichtet, synchron zueinander jeweils eine jüngste der empfangenen Zeitinformationen TA, TB, TC der jeweiligen zugeordneten Erfassungseinheit 110, 120, 130 zu erfassen und die synchron erfassten Zeitinformationen TA, TB, TC der Mehrzahl der Erfassungseinheiten 110, 120, 130 gemeinsam als Synchronisationsdaten SD1, SD2 in einem der Speicherbereiche 141, 142 zu speichern.

Die Mehrzahl von Erfassungseinheiten 110, 120, 130 ergibt zusammen eine Erfassungseinrichtung 101, während die Mehrzahl von Steuereinheiten 150, 160, 170 zusammengefasst eine Steuereinrichtung 102 darstellt.

Die Zeitinformation TA, TB, TC umfasst bevorzugt einen Zeitstempel des Zeitgebers 211, 221, 231 der zugeordneten administrativen Domäne 210, 220, 230 und eine Identifikationsinformation zur Identifikation der dem Zeitgeber 211, 221, 231 zugeordneten administrativen Domäne 210, 220, 230.

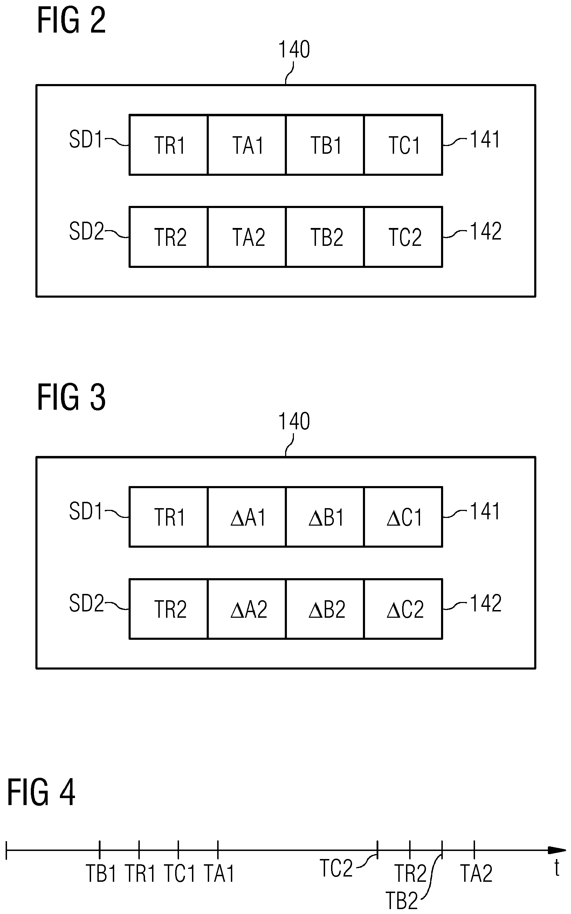

Fig. 2 zeigt ein schematisches Blockschaltbild eines ersten Ausführungsbeispiels der Speichervorrichtung 140 mit den Synchronisationsdaten SD1, SD2, welche in den jeweiligen Speicherbereichen 141, 142 gespeichert sind.

Ein jedes Synchronisationsdatum SD1, SD2 umfasst die zu einem bestimmten Zeitpunkt TR1, TR2 erfassten Zeitinformationen TA1, TB1, TC1, TA2, TB2, TC2 der Mehrzahl der Erfassungseinheiten 110, 120, 130 gemeinsam mit dem bestimmten Zeitpunkt TR1, TR2. Bevorzugt sind die Steuereinheiten 150, 160, 170 dazu eingerichtet, zu einem bestimmten Zeitpunkt TR1, TR2 einer von einer Referenzzeitquelle (nicht dargestellt) vorgegebenen Referenzzeit jeweils die jüngste der empfangenen Zeitinformationen TA1, TB1, TC1, TA2, TB2, TC2 der jeweiligen zugeordneten Erfassungseinheit 110, 120, 130 zu erfassen.

Die Referenzzeitquelle kann als eine lokale Referenzzeitquelle der Vorrichtung 100 ausgebildet sein oder alternativ als eine externe Referenzzeitquelle außerhalb der Vorrichtung 100 ausgebildet sein.

Die Steuereinheiten 150, 160, 170 sind hierbei insbesondere dazu eingerichtet, sich mit der Referenzzeitquelle zu synchronisieren.

Fig. 3 zeigt ein schematisches Blockschaltbild eines zweiten Ausführungsbeispiels der Speichervorrichtung 140 für den Fall, dass die Steuereinheiten 150, 160, 170 dazu eingerichtet sind, einen jeweiligen Zeitversatz ΔA1, ΔB1, ΔC1, ΔA2, ΔB2, ΔC2 zwischen einem Zeitstempel TA1, TB1, TC1, TA2, TB2, TC2 des Zeitgebers 210, 221, 231 der zugeordneten administrativen Domäne 210, 220, 230 und der Referenzzeit TR1, TR2 als Zeitinformation zu erfassen und zusammen mit der Referenzzeit TR1, TR2 zumindest als Teil der Synchronisationsdaten SD1, SD2 in dem Speicherbereich 141, 142 zu speichern.

Fig. 4 zeigt in einer schematischen Darstellung einen Zeitstrahl t mit mehreren zueinander versetzten Zeitinformationen TA1, TB1, TC1, welche um den bestimmten Zeitpunkt TR1 herum gruppiert sind, sowie mit mehreren zueinander versetzten Zeitinformationen TA2, TB2, TC2, welche den bestimmten Zeitpunkt TR2 einfassen.

Aus Fig. 4 ist insbesondere ersichtlich, dass ein Zeitversatz zwischen einer Zeitinformation TA1, TB1, TC1, TA2, TB2, TC2 und dem jeweiligen bestimmten Zeitpunkt TR1, TR2 zeitvariant sein kann. Im Regelfall driften die zugeordneten administrativen Domänen also in zeitlicher Hinsicht relativ zur Referenzzeit wie auch relativ zueinander.

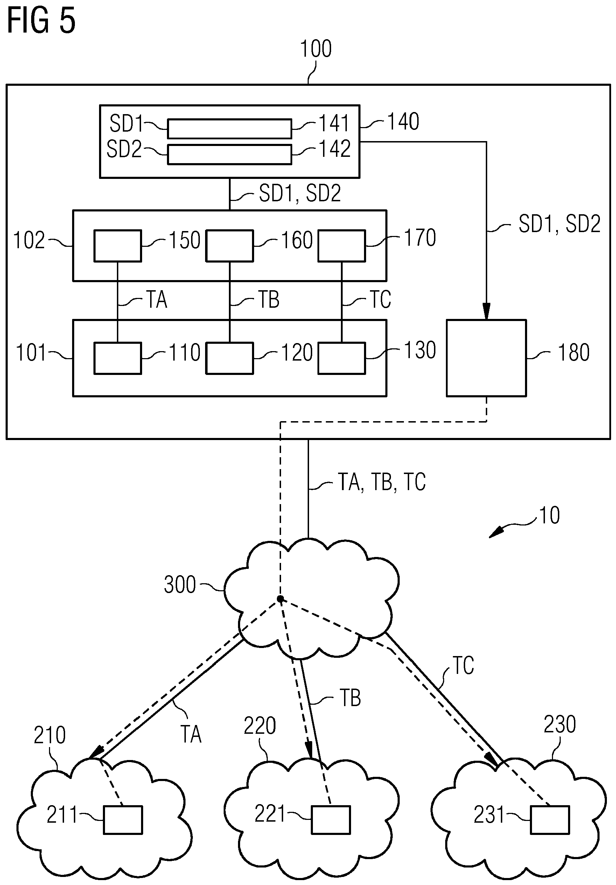

Fig. 5 zeigt ein schematisches Blockschaltbild eines zweiten Ausführungsbeispiels des Systems 10 mit einer Bereitstellungseinheit 180.

Die Bereitstellungseinheit 180 ist insbesondere dazu eingerichtet, die in der Speichervorrichtung 140 gespeicherten Synchronisationsdaten SD1, SD2 zumindest einer externen Einrichtung 210, 220, 230 bereitzustellen.

Bevorzugt ist die zumindest eine externe Einrichtung 210, 220, 230 dabei zumindest eine der administrativen Domänen 210, 220, 230.

Die Bereitstellungseinheit 180 ist vorzugsweise dazu eingerichtet, auch eine von den Synchronisationsdaten SD1, SD2 abgeleitete Synchronisationsinformation der zumindest einen externen Einrichtung 210, 220, 230 bereitzustellen.

Vorzugsweise ist die Bereitstellungseinheit 180 dazu eingerichtet, die gespeicherten Synchronisationsdaten SD1, SD2 ausschließlich über eine gesicherte Verbindung, insbesondere über eine verschlüsselte und/oder integritätsgeschützte Verbindung, der zumindest einen externen Eirichtung 210, 220, 230 bereitzustellen.

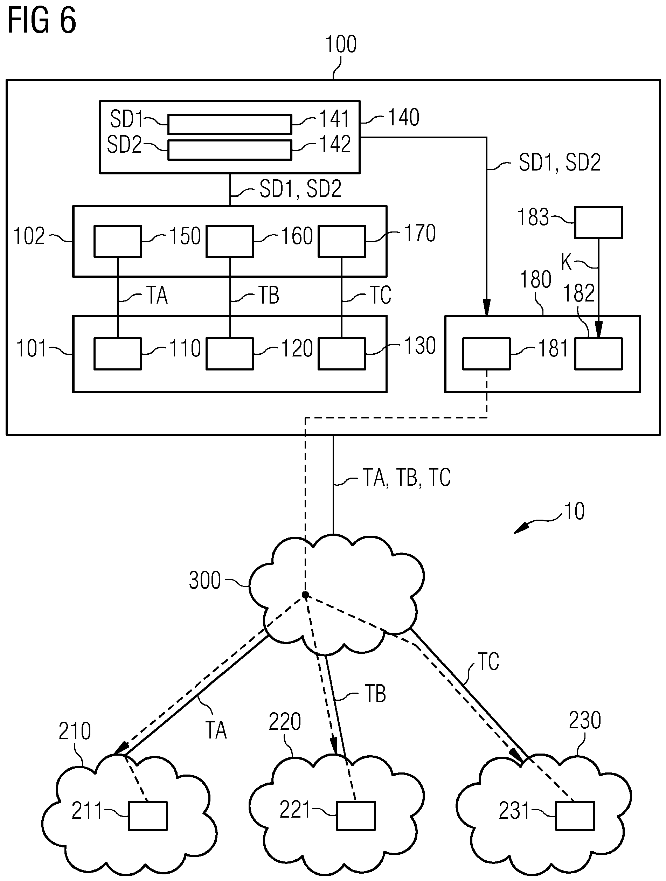

Fig. 6 zeigt ein schematisches Blockschaltbild eines dritten Ausführungsbeispiels des Systems 10 mit der Bereitstellungseinheit 180.

Diese weist hierbei eine Übersetzungseinheit 181 auf, welche beispielsweise dazu eingerichtet ist, eine erste Zeitinformation TA bezogen auf eine erste administrative Domäne 210 der Mehrzahl der administrativen Domänen 210, 220, 230 mittels der gespeicherten Synchronisationsdaten SD1, SD2 in eine zweite Zeitinformation TB bezogen auf eine zweite administrative Domäne 220 der Mehrzahl der administrativen Domänen 210, 220, 230 zu übersetzen.

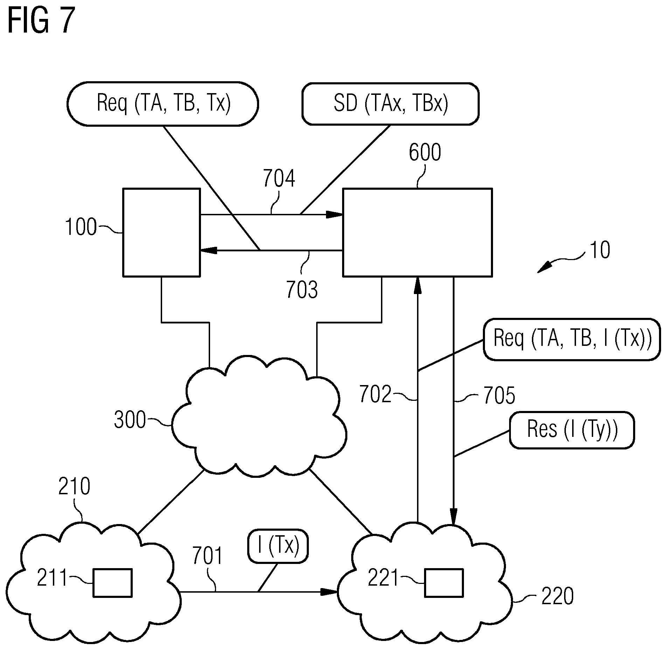

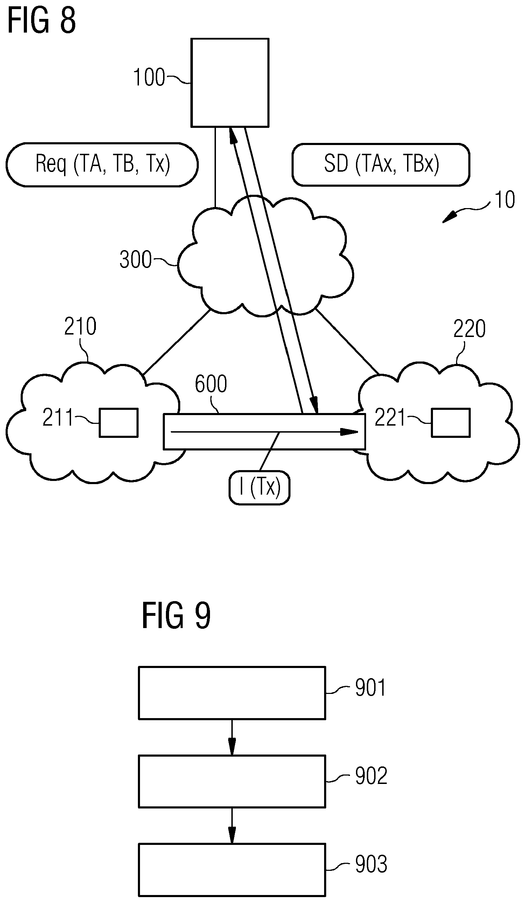

Ferner weist die Bereitstellungseinheit 180 eine Transformationseinheit 182 auf. Zudem umfasst die Vorrichtung 100 eine Speichereinheit 183, welche dazu eingerichtet ist, der Transformationseinheit 182 einen kryptographischen Schlüssel K bereitzustellen. Die Transformationseinheit 182 wird in den folgenden Fig. 7 und 8 genauer diskutiert.

Fig. 7 zeigt ein schematisches Blockschaltbild eines vierten Ausführungsbeispiels des Systems 10 mit einer von der Vorrichtung 100 abgesetzten Transformationseinheit 600.

Das System 10 weist hierbei eine erste administrative Domäne 210 mit dem Zeitgeber 211 und eine zweite administrative Domäne 220 mit dem Zeitgeber 221 auf, wobei die administrativen Domänen 210, 220 über das Netzwerk 300 untereinander sowie mit der Vorrichtung 100 verbunden sind.

Ferner ist die von der Vorrichtung 100 beabstandete Transformationseinheit 600 ebenfalls über das Netzwerk 300 mit der Vorrichtung 100 und den administrativen Domänen 210, 220 verbunden.

Die Transformationseinheit 600 dieses Ausführungsbeispiels stellt externen Einrichtungen, wie insbesondere den administrativen Domänen 210, 220, einen zentralen Dienst zur Transformation von auf die erste administrative Domäne 210 zeitbezogener Information I(Tx) in auf die zweite administrative Domäne 220 zeitbezogene Information I(Ty) bereit (und vice versa).

Hierbei empfängt die zweite administrative Domäne 220 zunächst in einer Nachricht 701 die auf die erste administrative Domäne 210 zeitbezogene Information I(Tx), zu deren Transformation sie den oben genannten Dienst heranzieht.

Die Transformationseinheit 600 empfängt dementsprechend eine erste Anfrage-Nachricht Req, 702 für die auf die zweite administrative Domäne 220 zeitbezogene Information I(Ty), wobei die erste Anfrage-Nachricht vorzugsweise eine erste Zeitinformation TA bezogen auf die erste administrative Domäne 210, eine zweite Zeitinformation TB bezogen auf die zweite administrative Domäne 220 und die auf die erste administrative Domäne 210 zeitbezogene Information I(Tx) enthält.

Infolgedessen oder in Abständen sendet die Transformationseinheit 600 eine zweite Anfrage-Nachricht Req, 703 für ein auf die erste administrative Domäne 210 und die zweite administrative Domäne 220 bezogenes Synchronisationsdatum SD an die Bereitstellungseinheit 180 in der Vorrichtung 100. Bevorzugt enthält die zweite Anfrage-Nachricht Req, 703 die erste Zeitinformation TA, die zweite Zeitinformation TB und eine Information zur Angabe eines Zeitraums Tx für die Transformation.

Als Resultat erhält die Transformationseinheit 600 eine erste Antwort-Nachricht 704 mit dem Synchronisationsdatum SD von der Bereitstellungseinheit 180 der Vorrichtung 100. Vorzugsweise umfasst die erste Antwort-Nachricht 704 eine dritte Zeitinformation TAx bezogen auf die erste administrative Domäne 210 und eine vierte Zeitinformation TBx bezogen auf die zweite administrative Domäne 220.

Schließlich wird eine zweite Antwort-Nachricht Res, 705 mit der auf die zweite administrative Domäne 220 zeitbezogenen Information I(Ty) von der Transformationseinheit 600 bereitgestellt, wobei die zeitbezogene Information I(Ty) auf der auf die erste administrative Domäne 210 zeitbezogenen Information I(Tx) und dem empfangenen Synchronisationsdatum SD beruht.

Fig. 8 zeigt ein schematisches Blockschaltbild eines fünften Ausführungsbeispiels des Systems 10 mit einer zwischen administrativen Domänen 210, 220 gekoppelten Transformationseinheit 600.

Die Transformationseinheit 600 dieses Ausführungsbeispiels stellt insbesondere den angekoppelten administrativen Domänen 210, 220 einen dezentralen Dienst zur Transformation von auf die erste administrative Domäne 210 zeitbezogener Information I(Tx) in auf die zweite administrative Domäne 220 zeitbezogene Information I(Ty) bereit (und vice versa).

Dabei empfängt die Transformationseinheit 600 zunächst von der ersten administrativen Domäne 210 die auf diese zeitbezogene Information I(Tx).

In der Folge oder in Abständen sendet die Transformationseinheit 600 eine Anfrage-Nachricht Req für ein auf die erste administrative Domäne 210 und die zweite administrative Domäne 210 bezogenes Synchronisationsdatum SD an die Bereitstellungseinheit 180 in der Vorrichtung 100. Bevorzugt enthält die Anfrage-Nachricht Req eine erste Zeitinformation TA bezogen auf die erste administrative Domäne 210, eine zweite Zeitinformation TB bezogen auf die zweite administrative Domäne 220 und eine dritte Zeitinformation Tx zur Angabe eines Zeitraums für die Transformation.

Im Gegenzug erhält die Transformationseinheit 600 eine Antwort-Nachricht mit dem Synchronisationsdatum SD von der Bereitstellungseinheit 180 der Vorrichtung 100. Vorzugsweise umfasst die Antwort-Nachricht eine dritte Zeitinformation TAx bezogen auf die erste administrative Domäne 210 und eine vierte Zeitinformation TBx bezogen auf die zweite administrative Domäne 220.

Mit diesen Informationen ist für die Transformationseinheit 600 ein Zeitversatz zwischen den beiden angekoppelten administrativen Domänen 210, 220 auflösbar. Sie stellt somit der zweiten administrativen Domäne 220 eine auf diese zeitbezogene Information I(Tx) in Abhängigkeit von der auf die erste administrative Domäne 210 zeitbezogenen Information I(Tx) und des empfangenen Synchronisationsdatums SD bereit.

Fig. 9 zeigt ein schematisches Ablaufdiagramm eines Ausführungsbeispiels eines Verfahrens zur Erfassung von Zeitinformationen TA, TB, TC unterschiedlicher administrativer Domänen 210, 220, 230.

Eine jede der administrativen Domänen 210, 220, 230 umfasst dabei einen Zeitgeber 211, 221, 231 zur Ausgabe einer Zeitinformation TA, TB, TC für die jeweilige administrative Domäne 210, 220, 230.

Das Verfahren weist die Schritte 901 bis 903 auf:
Im Schritt 901 werden die Zeitinformationen TA, TB, TC von einem jeweiligen Zeitgeber 211, 221, 231 der administrativen Domänen 210, 220, 230 empfangen.

Im Schritt 902 wird jeweils eine jüngste der von den Zeitgebern 211, 221, 231 empfangenen Zeitinformationen TA, TB, TC synchron erfasst.

Im Schritt 903 werden die synchron erfassten Zeitinformationen TA, TB, TC gemeinsam als Synchronisationsdaten SD1, SD2 in einem Speicherbereich 141, 142 einer Speichervorrichtung 140 gespeichert.

Obwohl die vorliegende Erfindung anhand von Ausführungsbeispielen beschrieben wurde, ist sie vielfältig modifizierbar.

## Patentansprüche

1. Vorrichtung (100) zur Erfassung von Zeitinformationen unterschiedlicher administrativer Domänen (210, 220, 230), mit:
einer Mehrzahl von Erfassungseinheiten (110, 120, 130), wobei die jeweilige Erfassungseinheit (110, 120, 130) einer der administrativen Domänen (210, 220, 230) zugeordnet ist und dazu eingerichtet ist, Zeitinformationen (TA1, TA2; TB1, TB2, TC1, TC2) von einem Zeitgeber (211, 221, 231) der zugeordneten administrativen Domäne (210, 220, 230) zu empfangen, und sich mit dem Zeitgeber der zugeordneten administrativen Domäne zu synchronisieren,
einer Speichervorrichtung (140) mit einer Mehrzahl von Speicherbereichen (141, 142),
einer Mehrzahl von Steuereinheiten (150, 160, 170), wobei die jeweilige Steuereinheit (150, 160, 170) genau einer der Erfassungseinheiten (110, 120, 130) zugeordnet ist, wobei die Steuereinheiten (150, 160, 170) dazu eingerichtet sind, synchron zueinander, zu einem bestimmten Zeitpunkt einer von der einer Referenzzeitquelle vorgegebenen Referenzzeit jeweils eine jüngste der empfangenen Zeitinformationen (TA1, TB1, TC1; TA2, TB2, TC2) der jeweiligen zugeordneten Erfassungseinheit (110, 120, 130) zu erfassen und die synchron erfassten Zeitinformationen (TA1, TB1, TC1; TA2, TB2, TC2) der Mehrzahl der Erfassungseinheiten (110, 120, 130) gemeinsam als Synchronisationsdaten (SD1, SD2) in einem der Speicherbereiche (141, 142) zu speichern, und
eine Übersetzungseinheit (181), welche dazu eingerichtet ist, eine erste Zeitinformation (TA, TB, TC) bezogen auf eine erste administrative Domäne der Mehrzahl der administrativen Domänen (210, 220, 230) mittels der gespeicherten Synchronisationsdaten (SD1, SD2) in eine zweite Zeitinformation (TA, TB, TC) bezogen auf eine zweite administrative Domäne der Mehrzahl der administrativen Domänen (210, 220, 230) zu übersetzen.

2. Vorrichtung nach Anspruch 1,
**dadurch gekennzeichnet,**
**dass** die Steuereinheiten (150, 160, 170) dazu eingerichtet sind, die zu dem bestimmten Zeitpunkt (TR1, TR2) erfassten Zeitinformationen (TA1, TB1, TC1; TA2, TB2, TC2) der Mehrzahl der Erfassungseinheiten (110, 120, 130) gemeinsam mit dem bestimmten Zeitpunkt (TR1, TR2) als die Synchronisationsdaten (SD1, SD2) in dem Speicherbereich (141, 142) zu speichern.

3. Vorrichtung nach Anspruch 2,
**dadurch gekennzeichnet,**
**dass** die Referenzzeitquelle (103, 400) als eine lokale Referenzzeitquelle (103) der Vorrichtung (100) ausgebildet ist oder als eine externe Referenzzeitquelle (400) außerhalb der Vorrichtung (100) ausgebildet ist.

4. Vorrichtung nach Anspruch 2 oder 3,
**dadurch gekennzeichnet,**
**dass** die Steuereinheiten (150, 160, 170) dazu eingerichtet sind, sich mit der Referenzzeitquelle (103, 400) zu synchronisieren.

5. Vorrichtung nach Anspruch 4,
**dadurch gekennzeichnet,**
**dass** die Steuereinheiten (150, 160, 170) dazu eingerichtet sind, einen jeweiligen Zeitversatz (ΔA1, ΔB1, ΔC1, ΔA2, ΔB2, ΔC2) zwischen einem Zeitstempel (TA1, TB1, TC1, TA2, TB2, TC2) des Zeitgebers (211, 221, 231) der zugeordneten administrativen Domäne (210, 220, 230) und der Referenzzeit (TR1, TR2) als Zeitinformation zu erfassen und zumindest als Teil der Synchronisationsdaten (SD1, SD2) in dem Speicherbereich (141, 142) zu speichern.

6. Vorrichtung nach einem der Ansprüche 1 bis 5,
**gekennzeichnet durch**
eine Bereitstellungseinheit (180), welche dazu eingerichtet ist, die Synchronisationsdaten (SD1, SD2) zumindest einer externen Einrichtung (210, 220, 230) bereitzustellen.

7. Vorrichtung nach einem der Ansprüche 1 bis 5,
**gekennzeichnet durch**
eine Bereitstellungseinheit (180), welche dazu eingerichtet ist, die Synchronisationsdaten (SD1, SD2) oder eine von den Synchronisationsdaten (SD1, SD2) abgeleitete Synchronisationsinformation zumindest einer externen Einrichtung (210, 220, 230) bereitzustellen.

8. Vorrichtung nach Anspruch 6 oder 7,
**dadurch gekennzeichnet,**
**dass** die Bereitstellungseinheit (180) dazu eingerichtet ist, die gespeicherten Synchronisationsdaten (SD1, SD2) ausschließlich über eine gesicherte Verbindung, insbesondere über eine verschlüsselte und/oder integritätsgeschützte Verbindung, der zumindest einen externen Einrichtung (210, 220, 230) bereitzustellen.

9. Vorrichtung nach einem der Ansprüche 6 bis 8,
**dadurch gekennzeichnet,**
**dass** die zumindest eine externe Einrichtung (210, 220, 230) zumindest eine der administrativen Domänen (210, 220, 230) umfasst.

10. Vorrichtung nach einem der Ansprüche 1 bis 9,
**dadurch gekennzeichnet,**
**dass** die Zeitinformation (TA1, TA2; TB1, TB2, TC1, TC2) einen Zeitstempel des Zeitgebers (211, 221, 231) der zugeordneten administrativen Domäne (210, 220, 230) und eine Identifikationsinformation zur Identifikation der dem Zeitgeber zugeordneten administrativen Domäne (210, 220, 230) umfasst.

11. Vorrichtung nach einem der Ansprüche 6 bis 10,
**gekennzeichnet durch**
eine Transformationseinheit (182, 600), welche dazu eingerichtet ist, eine auf eine erste administrative Domäne der administrativen Domänen (210, 220, 230) zeitbezogene Information (I(Tx)) in eine auf eine zweite administrative Domäne der administrativen Domänen (210, 220, 230) zeitbezogene Information (I(Ty)) zu transformieren, wobei die Transformationseinheit (182) dazu eingerichtet ist,
eine erste Anfrage-Nachricht (Req, 702) für die auf die zweite administrative Domäne (220) zeitbezogene Information (I(Ty)), welche eine erste Zeitinformation (TA) bezogen auf die erste administrative Domäne (210), eine zweite Zeitinformation (TB) bezogen auf die zweite administrative Domäne (220) und die auf die erste administrative Domäne (210) zeitbezogene Information (I(Tx)) enthält, zu empfangen,
eine zweite Anfrage-Nachricht (Req, 703) für ein auf die erste administrative Domäne (210) und die zweite administrative Domäne (220) bezogenes Synchronisationsdatum (SD), welche die erste Zeitinformation (TA), die zweite Zeitinformation (TB) und eine Information zur Angabe eines Zeitraums (Tx) für die Transformation enthält, an die Bereitstellungseinheit (180) zu senden,
eine erste Antwort-Nachricht (704) mit dem Synchronisationsdatum (SD) von der Bereitstellungseinheit (180) zu empfangen, welches eine dritte Zeitinformation (TAx) bezogen auf die erste administrative Domäne (210) und eine vierte Zeitinformation (TBx) bezogen auf die zweite administrative Domäne (220) umfasst, und
eine zweite Antwort-Nachricht (Res, 705) mit der auf die zweite administrative Domäne (220) zeitbezogenen Information (I(Ty)) in Abhängigkeit von der auf die erste administrative Domäne (210) zeitbezogenen Information (I(Tx)) und des empfangenen Synchronisationsdatums (SD) bereitzustellen.

12. System (10), mit:
einer Mehrzahl unterschiedlicher administrativer Domänen (210, 220, 230),
einer Vorrichtung (100) zur Erfassung von Zeitinformationen der administrativen Domänen (210, 220, 230) nach einem der Ansprüche 1 bis 11, und
einem Netzwerk (300) zum Koppeln der Vorrichtung mit den administrativen Domänen (210, 220, 230).

13. System nach Anspruch 12,
**gekennzeichnet durch**
eine zwischen einer ersten (210) und einer zweiten (220) der administrativen Domänen (210, 220, 230) gekoppelten Transformationseinheit (600), welche dazu eingerichtet ist, eine auf die erste administrative Domäne (210) zeitbezogene Information (I(Tx)) in eine auf die zweite administrative Domäne (220) zeitbezogene Information (I(Tx)) zu transformieren, wobei die Transformationseinheit (600) dazu eingerichtet ist,
die auf die erste administrative Domäne (210) zeitbezogene Information (I(Tx)) zu empfangen,
eine Anfrage-Nachricht (Req) für ein auf die erste administrative Domäne (210) und die zweite administrative Domäne (210) bezogenes Synchronisationsdatum (SD), welche eine erste Zeitinformation (TA) bezogen auf die erste administrative Domäne (210), eine zweite Zeitinformation (TB) bezogen auf die zweite administrative Domäne (220) und eine dritte Zeitinformation (Tx) zur Angabe eines Zeitraums für die Transformation enthält, an die Bereitstellungseinheit (180) zu senden,
eine Antwort-Nachricht mit dem Synchronisationsdatum (SD) von der Bereitstellungseinheit (180) zu empfangen, welches eine dritte Zeitinformation (TAx) bezogen auf die erste administrative Domäne (210) und eine vierte Zeitinformation (TBx) bezogen auf die zweite administrative Domäne (220) umfasst, und
eine auf die zweite administrative Domäne (220) zeitbezogene Information (I(Tx)) in Abhängigkeit von der auf die erste administrative Domäne (210) zeitbezogenen Information (I(Tx)) und des empfangenen Synchronisationsdatums (SD) bereitzustellen.

14. Verfahren zur Erfassung von Zeitinformationen unterschiedlicher administrativer Domänen (210, 220, 230), wobei jede der administrativen Domänen (210, 220, 230) einen Zeitgeber (211, 221, 231) zur Ausgabe einer Zeitinformation (TA, TB, TC) für die administrative Domäne (210, 220, 230), welche einer Erfassungseinheit zugeordnet ist, aufweist, mit folgenden Schritten:
Empfangen (901) der Zeitinformationen (TA, TB, TC) von einem jeweiligen Zeitgeber (211, 221, 231) der zugeordneten administrativen Domäne (210, 220, 230) zur Synchronisation mit dem Zeitgeber der zugeordneten administrativen Domäne,
Synchrones, zu einem Zeitpunkt einer von einer Referenzzeitquelle vorgegebenen Referenzzeit Erfassen (902) jeweils einer jüngsten der von den Zeitgebern (211, 221, 231) empfangenen Zeitinformationen (TA, TB, TC),
Speichern (903) der synchron erfassten Zeitinformationen (TA, TB, TC) gemeinsam als Synchronisationsdaten (SD1, SD2) in einem Speicherbereich (141, 142) einer Speichervorrichtung (140), Übersetzen einer ersten Zeitinformation (TA, TB, TC) bezogen auf eine erste administrative Domäne der Mehrzahl der administrativen Domänen (210, 220, 230) mittels der gespeicherten Synchronisationsdaten (SD1, SD2) in eine zweite Zeitinformation (TA, TB, TC) bezogen auf eine zweite administrative Domäne der Mehrzahl der administrativen Domänen (210, 220, 230) .

## Claims

1. Device (100) for detecting time information of different administrative domains (210, 220, 230) with:
a plurality of detection units (110, 120, 130), wherein each detection unit (110, 120, 130) is assigned to one of the administrative domains (210, 220, 230) and is configured to receive time information (TA1, TA2; TB1, TB2, TC1, TC2) from a timer (211, 221, 231) of the assigned administrative domain (210, 220, 230) and to synchronize with the timer of the assigned administrative domain,
a storage device (140) with a plurality of storage areas (141, 142),
a plurality of control units (150, 160, 170), wherein each control unit (150, 160, 170) is assigned to precisely one of the detection units (110, 120, 130), the control units (150, 160, 170) being configured to detect, synchronously with one another, at a certain point in time of a reference time predetermined by the one reference time source, a respective most recent item of received time information (TA1, TB1, TC1; TA2, TB2, TC2) of the respective assigned detection unit (110, 120, 130) and to store the synchronously detected time information (TA1, TB1, TC1; TA2, TB2, TC2) of the plurality of detection units (110, 120, 130) together as synchronization data (SD1, SD2) in one of the storage areas (141, 142), and
a translation unit (181) which is configured to translate a first item of time information (TA, TB, TC) relating to a first administrative domain of the plurality of administrative domains (210, 220, 230) by means of the stored synchronization data (SD1, SD2) into a second item of time information (TA, TB, TC) relating to a second administrative domain of the plurality of administrative domains (210, 220, 230).

2. Device according to Claim 1,
**characterized in that**
the control units (150, 160, 170) are configured to store the time information (TA1, TB1, TC1; TA2, TB2, TC2) of the plurality of detection units (110, 120, 130) detected at the certain point in time (TR1, TR2) together with the certain point in time (TR1, TR2) as the synchronization data (SD1, SD2) in the storage area (141, 142).

3. Device according to Claim 2,
**characterized in that**
the reference time source (103, 400) is in the form of a local reference time source (103) of the device (100) or is in the form of an external reference time source (400) outside the device (100).

4. Device according to Claim 2 or 3,
**characterized in that**
the control units (150, 160, 170) are configured to synchronize themselves with the reference time source (103, 400) .

5. Device according to Claim 4,
**characterized in that**
the control units (150, 160, 170) are configured to detect a respective time offset (ΔA1, ΔB1, ΔC1, ΔA2, ΔB2, ΔC2) between a time stamp (TA1, TB1, TC1, TA2, TB2, TC2) of the timer (211, 221, 231) of the assigned administrative domain (210, 220, 230) and the reference time (TR1, TR2) as time information and store this at least as part of the synchronization data (SD1, SD2) in the storage area (141, 142).

6. Device according to any one of Claims 1 to 5,
**characterized by**
a supply unit (180) which is configured to provide the synchronization data (SD1, SD2) of at least one external device (210, 220, 230).

7. Device according to any one of Claims 1 to 5,
**characterized by**
a supply unit (180) which is configured to provide the synchronization data (SD1, SD2) or an item of synchronization information derived from the synchronization data (SD1, SD2) of at least one external device (210, 220, 230).

8. Device according to Claim 6 or 7,
**characterized in that**
the supply unit (180) is configured to provide the stored synchronization data (SD1, SD2) exclusively via a secure connection, in particular via an encrypted and/or integrity-protected connection, of the at least one external device (210, 220, 230).

9. Device according to any one of Claims 6 to 8,
**characterized in that**
the at least one external device (210, 220, 230) comprises at least one of the administrative domains (210, 220, 230).

10. Device according to any one of Claims 1 to 9,
**characterized in that**
the time information (TA1, TA2; TB1, TB2, TC1, TC2) includes a time stamp of the timer (211, 221, 231) of the assigned administrative domain (210, 220, 230) and identification information for the identification of the administrative domain (210, 220, 230) assigned to the timer.

11. Device according to any one of Claims 6 to 10,
**characterized by**
a transformation unit (182, 600) which is configured to transform information (I(Tx)) time-related to a first administrative domain of the administrative domains (210, 220, 230) into information (I(Ty)) time-related to a second administrative domain of the administrative domains (210, 220, 230), wherein the transformation unit (182) is configured
to receive a first request message (Req, 702) for the information (I(Ty)) time-related to the second administrative domain (220) which contains a first item of time information (TA) relating to the first administrative domain (210), a second item of time information (TB) relating to the second administrative domain (220) and the information (I(Tx)) time-related to the first administrative domain (210),
to send to the supply unit (180) a second request message (Req, 703) for a synchronization datum (SD) relating to the first administrative domain (210) and the second administrative domain (220) which contains the first item of time information (TA), the second item of time information (TB) and information indicating a period of time (Tx) for the transformation,
to receive a first reply message (704) from the supply unit (180) with the synchronization datum (SD), which comprises a third item of time information (TAx) relating to the first administrative domain (210) and a fourth item of time information (TBx) relating to the second administrative domain (220), and
to provide a second reply message (Res, 705) with the information (I(Ty)) time-related to the second administrative domain (220) as a function of the information (I(Tx)) time-related to the first administrative domain (210) and the received synchronization datum (SD).

12. System (10) with:
a plurality of different administrative domains (210, 220, 230),
a device (100) for detecting time information of the administrative domains (210, 220, 230) according to any one of Claims 1 to 11, and
a network (300) for coupling the device to the administrative domains (210, 220, 230).

13. System according to Claim 12,
**characterized by**
a transformation unit (600) coupled between a first (210) and a second (220) of the administrative domains (210, 220, 230) which is configured to transform information (I(Tx)) time-related to the first administrative domain (210) into information (I(Tx)) time-related to the second administrative domain (220), wherein the transformation unit (600) is configured
to receive the information (I(Tx)) time-related to the first administrative domain (210),
to send to the supply unit (180) a request message (Req) for a synchronization datum (SD) relating to the first administrative domain (210) and the second administrative domain (210) which contains a first item of time information (TA) relating to the first administrative domain (210), a second item of time information (TB) relating to the second administrative domain (220) and a third item of time information (Tx) for indicating a time period for the transformation,
to receive a reply message from the supply unit (180) with the synchronization datum (SD) which contains a third item of time information (TAx) relating to the first administrative domain (210) and a fourth item of time information (TBx) relating to the second administrative domain (220), and
to provide information (I(Tx)) time-related to the second administrative domain (220) as a function of the information (I(Tx)) time-related to the first administrative domain (210) and the received synchronization datum (SD).

14. Method of detecting time information of different administrative domains (210, 220, 230), wherein each of the administrative domains (210, 220, 230) has a timer (211, 221, 231) for issuing time information (TA, TB, TC) for the administrative domain (210, 220, 230) which is assigned to a detection unit, with the following steps:
receipt (901) of the time information (TA, TB, TC) of a respective timer (211, 221, 231) of the assigned administrative domain (210, 220, 230) for synchronizing with the timer of the assigned administrative domain,
synchronous detection (902), at a point in time of a reference time predetermined by a reference time source, of a respective most recent item of time information (TA, TB, TC) received from the timers (211, 221, 231),
storage (903) of the synchronously detected time information (TA, TB, TC) together as synchronization data (SD1, SD2) in a storage area (141, 142) of a storage device (140),
translation of a first item of time information (TA, TB, TC) relating to a first administrative domain of the plurality of administrative domains (210, 220, 230) by means of the stored synchronization data (SD1, SD2) into a second item of time information (TA, TB, TC) relating to a second administrative domain of the plurality of administrative domains (210, 220, 230) .

## Revendications

1. Dispositif (100) pour saisir des informations temporelles de différents domaines administratifs (210, 220, 230), comportant :
une pluralité d'unités de saisie (110, 120, 130), l'unité de saisie respective (110, 120, 130) étant associée à un des domaines administratifs (210, 220, 230) et étant configurée pour recevoir des informations temporelles (TA1, TA2 ; TB1, TB2, TC1, TC2) d'une minuterie (211, 221, 231) du domaine administratif associé (210, 220, 230) et se synchroniser sur la minuterie du domaine administratif associé ;
un dispositif de mémoire (140) avec une pluralité de zones de mémoire (141, 142),
une pluralité d'unités de commande (150, 160, 170), l'unité de commande respective (150, 160, 170) étant associée à exactement une des unités de saisie (110, 120, 130), les unités de commande (150, 160, 170) étant configurées pour saisir, de manière synchrone l'une par rapport à l'autre, à un instant déterminé d'un temps de référence spécifié à une source de temps de référence, respectivement une information temporelle la plus récente des informations temporelles reçues (TA1, TB1, TC1 ; TA2, TB2, TC2) de l'unité de saisie associée respective (110, 120, 130) et sauvegarder les informations temporelles saisies de manière synchrone (TA1, TB1, TC1 ; TA2, TB2, TC2) de la pluralité des unités de saisie (110, 120, 130) ensemble en tant que données de synchronisation (SD1, SD2) dans une des zones de mémoire (141, 142) et
une unité de traduction (181) qui est configurée pour traduire une première information temporelle (TA, TB, TC) relative à un premier domaine administratif de la pluralité des domaines administratifs (210, 220, 230) au moyen des données de synchronisation sauvegardées (SD1, SD2) en une deuxième information temporelle (TA, TB, TC) relative à un deuxième domaine administratif de la pluralité des domaines administratifs (210, 220, 230).

2. Dispositif selon la revendication 1, **caractérisé en ce que** les unités de commande (150, 160, 170) sont configurées pour sauvegarder les informations temporelles (TA1, TB1, TC1 ; TA2, TB2, TC2) de la pluralité des unités de saisie (110, 120, 130) saisies à l'instant déterminé (TR1, TR2) ensemble avec l'instant déterminé (TR1, TR2) en tant que les données de synchronisation (SD1, SD2) dans la zone de mémoire (141, 142).

3. Dispositif selon la revendication 2, **caractérisé en ce que** la source de temps de référence (103, 400) est réalisée en tant que source de temps de référence locale (103) du dispositif (100) ou en tant que source de temps de référence externe (400) en dehors du dispositif (100).

4. Dispositif selon la revendication 2 ou 3, **caractérisé en ce que** les unités de commande (150, 160, 170) sont configurées pour se synchroniser sur la source de temps de référence (103, 400).

5. Dispositif selon la revendication 4, **caractérisé en ce que** les unités de commande (150, 160, 170) sont configurées pour saisir un décalage de temps respectif (ΔA1, ΔB1, ΔC1, ΔA2, ΔB2, ΔC2) entre une marque temporelle (TA1, TB1, TC1, TA2, TB2, TC2) de la minuterie (211, 221, 231) du domaine administratif associé (210, 220, 230) et le temps de référence (TR1, TR2) en tant qu'information temporelle et le sauvegarder au moins en tant que partie des données de synchronisation (SD1, SD2) dans la zone de mémoire (141, 142).

6. Dispositif selon l'une des revendications 1 à 5, **caractérisé par** une unité de mise à disposition (180), qui est configurée pour fournir les données de synchronisation (SD1, SD2) au moins à un dispositif externe (210, 220, 230).

7. Dispositif selon l'une des revendications 1 à 5, **caractérisé par** une unité de mise à disposition (180) qui est configurée pour fournir les données de synchronisation (SD1, SD2) ou une information de synchronisation dérivée des données de synchronisation (SD1, SD2) au moins à un dispositif externe (210, 220, 230).

8. Dispositif selon la revendication 6 ou 7, **caractérisé en ce que** l'unité de mise à disposition (180) est configurée pour fournir à l'au moins un dispositif externe (210, 220, 230) les données de synchronisation sauvegardées (SD1, SD2) uniquement via une liaison sécurisée, et plus particulièrement via une liaison cryptée et/ou dont l'intégrité est protégée.

9. Dispositif selon l'une des revendications 6 à 8, **caractérisé en ce que** l'au moins un dispositif externe (210, 220, 230) comprend au moins un des domaines administratifs (210, 220, 230).

10. Dispositif selon l'une des revendications 1 à 9, **caractérisé en ce que** l'information temporelle (TA1, TA2 ; TB1, TB2, TC1, TC2) comprend une marque temporelle de la minuterie (211, 221, 231) du domaine administratif associé (210, 220, 230) et une information d'identification pour identifier le domaine administratif (210, 220, 230) associé à la minuterie.

11. Dispositif selon l'une des revendications 6 à 10, **caractérisé par** une unité de transformation (182, 600) qui est configurée pour transformer une information temporelle (I(Tx)) relative à un premier domaine administratif des domaines administratifs (210, 220, 230) en une information temporelle (I(Ty)) relative à un deuxième domaine administratif des domaines administratifs (210, 220, 230), l'unité de transformation (182) étant configurée pour
recevoir un premier message de requête (Req, 702) pour l'information temporelle (I(Ty)) relative au deuxième domaine administratif (220), lequel contient une première information temporelle (TA) relative au premier domaine administratif (210), une deuxième information temporelle (TB) relative au deuxième domaine administratif (220) et l'information temporelle (I(Tx)) relative au premier domaine administratif (210),
envoyer à l'unité de mise à disposition (180) un deuxième message de requête (Req, 703) pour une donnée de synchronisation (SD) relative au premier domaine administratif (210) et au deuxième domaine administratif (220), lequel contient la première information temporelle (TA), la deuxième information temporelle (TB) et une information pour indiquer un espace de temps (Tx) pour la transformation,
recevoir un premier message de réponse (704) avec la donnée de synchronisation (SD) de l'unité de mise à disposition (180), laquelle donnée comprend une troisième information temporelle (TAx) relative au premier domaine administratif (210) et une quatrième information temporelle (TBx) relative au deuxième domaine administratif (220) et
fournir un deuxième message de réponse (Res, 705) avec l'information temporelle (I(Ty)) relative au deuxième domaine administratif (220) en fonction de l'information temporelle (I(Tx)) relative au premier domaine administratif (210) et de la donnée de synchronisation reçue (SD).

12. Système (10) comprenant :
une pluralité de différents domaines administratifs (210, 220, 230),
un dispositif (100) pour saisir des informations temporelles des domaines administratifs (210, 220, 230) selon l'une des revendications 1 à 11 et
un réseau (300) pour coupler le dispositif aux domaines administratifs (210, 220, 230).

13. Système selon la revendication 12, **caractérisé par**
une unité de transformation (600) couplée entre un premier (210) et un deuxième (220) des domaines administratifs (210, 220, 230), laquelle est configurée pour transformer une information temporelle (I(Tx)) relative au premier domaine administratif (210) en une information temporelle (I(Tx)) relative au deuxième domaine administratif (220), l'unité de transformation (600) étant configurée pour
recevoir l'information temporelle (I(Tx)) relative au premier domaine administratif (210),
envoyer à l'unité de mise à disposition (180) un message de requête (Req) pour une donnée de synchronisation (SD) relative au premier domaine administratif (210) et au deuxième domaine administratif (210), lequel message contient une première information temporelle (TA) relative au premier domaine administratif (210), une deuxième information temporelle (TB) relative au deuxième domaine administratif (220) et une troisième information temporelle (Tx) pour indiquer un espace de temps pour la transformation,
recevoir un message de réponse avec la donnée de synchronisation (SD) de l'unité de mise à disposition (180), laquelle donnée comprend une troisième information temporelle (TAx) relative au premier domaine administratif (210) et une quatrième information temporelle (TBx) et
fournir une information temporelle (I(Tx)) relative au deuxième domaine administratif (220) en fonction de l'information temporelle (I(Tx)) relative au premier domaine administratif (210) et de la donnée de synchronisation reçue (SD).

14. Procédé pour saisir des informations temporelles de différents domaines administratifs (210, 220, 230), chacun des domaines administratifs (210, 220, 230) comportant une minuterie (211, 221, 231) pour émettre une information temporelle (TA, TB, TC) pour le domaine administratif (210, 220, 230), lequel est associé à une unité de saisie, comportant les étapes suivantes :
réception (901) des informations temporelles (TA, TB, TC) d'une minuterie respective (211, 221, 231) du domaine administratif associé (210, 220, 230) pour synchronisation sur la minuterie du domaine administratif associé,
saisie (902) synchrone, à un instant d'un temps de référence spécifié par une source de temps de référence, de respectivement une information temporelle la plus récente des informations temporelles (TA, TB, TC) reçues des minuteries (211, 221, 231),
saisie (903) des informations temporelles saisies de manière synchrone (TA, TB, TC) ensemble en tant que données de synchronisation (SD1, SD2) dans une zone de mémoire (141, 142) d'un dispositif de mémoire (140),
traduction d'une première information temporelle (TA, TB, TC) relative au premier domaine administratif de la pluralité des domaines administratifs (210, 220, 230) au moyen des données de synchronisation sauvegardées (SD1, SD2) en une deuxième information temporelle (TA, TB, TC) relative à un deuxième domaine administratif de la pluralité des domaines administratifs (210, 220, 230).
